# EUROPÄISCHE PATENTSCHRIFT

(11) **EP 0 483 583 B1**
(45) Veröffentlichungstag und Bekanntmachung des Hinweises auf die Patenterteilung: **22.05.1996**
(21) Anmeldenummer: 91117520.6
(22) Anmeldetag: 14.10.1991
(51) Int. Cl.: C08K 5/54, C08L 101/06, C08G 77/42, C09D 201/06

(54) **Verwendung von Alkoxysilylaminen als Härter für Acetoacetat- oder Acetoacetamidgruppen aufweisende Kunststoffvorläufer**
Use of alkoxysilylamines as curing agents for acetoacetate or acetoacetamide groups-containing resin precursors
Utilisation d'alcoxysilylamines comme durcisseurs pour des précurseurs de matières plastiques contenant des groupes acétoacétate ou acétoacétamide

(30) Priorität: 27.10.1990 DE 4034279
(43) Veröffentlichungstag der Anmeldung: 06.05.1992
(73) Patentinhaber: BAYER AG, 51368 Leverkusen (DE)
(72) Erfinder: Schäfer, Walter, Dr., W-5653 Leichlingen (DE); Müller, Hanns-Peter, Dr., W-5068 Odenthal (DE); Sonntag, Michael, Dr., W-5068 Odenthal 3 (DE)

(56) Entgegenhaltungen:
- US-A- 3 637 570
- US-A- 3 668 183

## Beschreibung

Die Erfindung betrifft die Verwendung von bestimmten Alkoxysilylaminen als Härter für Acetoacetat- oder Acetoacetamidgruppen aufweisende Kunststoffvorläufer und ein Verfahren zur Herstellung von Beschichtungen auf beliebigen Substraten bzw. zum Imprägnieren von Naturstein oder Beton unter Verwendung von Beschichtungs-bzw. Imprägniermitteln auf Basis eines entsprechenden Zweikomponenten-Bindemittels.

Es ist bekannt, daß Polyacetoacetate oder Polyacetoacetamide spontan mit Polyaminen zu vernetzten Produkten reagieren (US-PS 3 668 183). Die entsprechenden Systeme weisen jedoch eine für die praktische Anwendung der Reaktion zu kurze Topfzeit auf. Durch Blockieren der Polyamine mit Carbonylverbindungen ist es möglich, stabile Mischungen herzustellen. Die Mischung wird erst durch Einwirkung von Feuchtigkeit aktiviert und vernetzt.

Es wurden nun überraschend gefunden, daß Polyacetoacetate oder Polyacetoacetamide sich mit Aminogruppen enthaltenden Alkoxysilanen zu Polyenaminen umsetzen lassen, die eine lange Verarbeitungszeit gewährleisten und ohne Einwirkung von Luftfeuchtigkeit vernetzen. Letzteres ist von Vorteil z.B. bei Beschichtungen einer Schichtdicke >50 µ.

Es konnte nicht vorausgesehen werden, daß das bei der Enamin-Bildung durch Reaktion des Polyacetoacetats bzw. Polyacetoacetamids mit dem Aminosilan entstehende Wasser nicht unverzüglich zu Siloxan-Verknüpfungen führt und dadurch eine spontane Vernetzung des Polymeren bewirken würde, was ebenfalls auf eine für die praktische Anwendung zu kurze Topfzeit hinauslaufen würde. Überraschenderweise ist dies jedoch nicht der Fall; vielmehr weisen Gemische aus Acetoacetat- und/oder Acetoacetamidgruppen aufweisenden Kunststoffvorläufern der nachstehend näher beschriebenen Art mit Aminosilanen der nachstehend näher beschriebenen Art im allgemeinen eine Topfzeit von mindestens 30 Minuten auf, wobei das durch Reaktion des Polyacetoacetats bzw. des Polyacetoacetamids mit dem Aminosilan entstehende Wasser in allmählich ablaufender Reaktion zur Vernetzung der Kunststoffvorläufer unter Ausbildung von Siloxanstrukturen führt. Hierbei ist von besonderem Vorteil, daß das intermediär entstehende Wasser "an Ort und Stelle" entsteht, so daß eine einwandfreie Durchhärtung auch von dicken Lackschichten gewährleistet ist, da die Härtungsreaktion nicht auf den Kontakt mit Luftfeuchtigkeit angewiesen ist.

Gegenstand der Erfindung ist die Verwendung von
a) eine primäre Aminogruppe und eine Alkoxysilangruppe aufweisenden organischen Verbindungen der Formel

   H₂N-R-Si(OR')₃ (I)

   wobei
   - R: für einen aliphatischen Kohlenwasserstoffrest mit 2 bis 6 Kohlenstoffatomen steht, mit der Maßgabe, daß zwischen dem Stickstoff- und dem Siliciumatom mindestens zwei Kohlenstoffatome angeordnet sind, und
   - R': für einen Alkylrest mit 1 bis 4 Kohlenstoffatomen steht,
   als Härter für
b) insgesamt mindestens zwei Acetoacetat- und/oder Acetoacetamidgruppen pro Molekül aufweisende Kunststoffvorläufer des Molekulargewichtsbereichs Mn von 400 bis 25.000.

Erfindungsgemäß kommen als Härter a) Verbindungen der bereits oben genannten Formel (I) in Betracht, für welche R und R' die bereits oben genannte Bedeutung haben. Vorzugsweise werden solche Verbindungen der Formel (I) verwendet, für welche R' für einen Alkylrest mit 1 oder 2 Kohlenstoffatomen, insbesondere für einen Methylrest steht.

Diese aminofunktionellen Silane lassen sich nach bekannten Methoden herstellen (W. Noll, "Chemie und Technologie der Silicone", Verlag Chemie GmbH, Weinheit 1968).

Besonders bevorzugt eingesetzt werden 2-Aminohexyl- oder 3-Aminopropyltrimethoxysilan, 3-Aminopropyltriethoxysilan, 4-Aminobutyltrimethoxysilan und/oder 4-Aminobutyltriethoxysilan.

Bei den Kunststoffvorläufern b) handelt es sich um Polymere des Molekulargewichtsbereichs Mn von 400 bis 25 000, vorzugsweise 700 bis 15 000, die pro Molekül insgesamt mindestens zwei Acetoacetat- undloder Acetoacetamidgruppen aufweisen. Besonders bevorzugt werden solche Polymere des genannten Molekulargewichtsbereichs eingesetzt, die pro Molekül mindestens zwei Acetoacetat-Struktureinheiten der Formel (II) 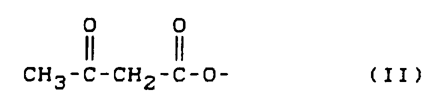 bei einem Gesamtgehalt der Polymeren an derartigen Struktureinheiten von 1 bis 55, vorzugsweise 8 bis 40 Gew,-%, aufweisen.

Derartige "Polyacetoacetate" bzw. "Polyacetoacetamide" sind im Prinzip bekannt (z.B. US-PS 3 668 183). Ihre Herstellung erfolgt z.B. durch Umsetzung der entsprechenden Hydroxylgruppen und/oder Aminogruppen enthaltenden Polymeren mit Alkylacetoacetaten oder mit Diketen.

Eine andere Möglichkeit zur Herstellung dieser Kunststoffvorläufer besteht in der Copolymerisation von olefinisch ungesätigten Monomeren wie z.B. Styrol, Acrylsäure- und/oder Methacrylsäurealkylestern mit ungesättigten Acetoacetat-funktionellen Monomeren, die ihrerseits beispielsweise durch Umsetzung von Hydroxyalkylacrylaten oder -methacrylaten mit Diketen zugänglich sind.

Vorzugsweise erfolgt jedoch die Herstellung der Kunststoffvorläufer b) durch Modifizierung von Hydroxyl- und/oder Aminogruppen, vorzugsweise ausschließlich Hydroxylgruppen als funktionelle Gruppen aufweisenden Verbindungen mit Diketen bei beispielsweise 80 bis 150°C, gegebenenfalls unter Mitverwendung von geeigneten Lösungsmitteln wie beispielsweise Xylol.

Zur Herstellung der Kunststoffvorläufer b) geeignete Ausgangsverbindungen sind beispielsweise die aus der Polyurethanchemie an sich bekannten Polyhydroxylverbindungen des Molekulargewichtsbereichs Mn 200 bis ca. 25 000, vorzugsweise 500 bis ca. 7000. Bei diesen Molekulargewichtsangaben handelt es sich um Näherungswerte. Das Molekulargewicht dieser Ausgangsmaterialien entspricht selbstverständlich dem Molekulargewicht der erfindungsgemäß eingesetzten Kunststoffvorläufer b) abzüglich dem Molekulargewicht der Acetoacetgruppen.

Das Molekulargewicht Mn von höhermolekularen Polyolen, Polyaminen oder erfindungsgemäß eingesetzten Kunststoffvorläufern b) (Molekulargewicht größer als ca. 5000) kann nach der Methode der Membranosmometrie ermittelt werden. Das Molekulargewicht der entsprechenden, vergleichsweise niedermolekularen Verbindungen (Molekulargewicht unter 5000) kann rechnerisch aus der Stöchiometrie der bei der Herstellung der Verbindungen eingesetzten Ausgangsmaterialien oder aus der Funktionalität und dem Gehalt an funktionellen Gruppen errechnet oder dampfdruckosmometrisch bestimmt werden.

Geeignete Ausgangsverbindungen zur Herstellung der Kunststoffvorläufer b) sind beispielsweise die aus der Polyurethanchemie an sich bekannten Polyhydroxypolyester insbesondere solche des Molekulargewichtsbereichs Mn 200 bis 3000 aus mehrbasischen Carbonsäuren wie Adipinsäure, Phthalsäure, Tetrahydrophthalsäure oder Hexahydrophthalsäure oder Gemischen derartiger Polycarbonsäuren mit einbasischen Säuren wie Benzoesäure oder Stearinsäure mit überschüssigen Mengen an mehrwertigen Alkoholen wie beispielsweise Ethylenglykol, Propylenglykol, Hexandiol-1,6, Trimethylolpropan, Glycerin, Neopentylglykol und/oder Pentaerythrit.

Weiterhin in Betracht kommen die aus der Polyurethanchemie an sich bekannten Polyhydroxypolyether, insbesondere des Molekulargewichtsbereichs 200 bis 25 000 und einer (mittleren) Hydroxylfunktionalität von 2 bis 6, vorzugsweise 2 bis 3, wie sie in an sich bekannter Weise durch Alkoxylierung von geeigneten Startermolekülen zugänglich sind. Als Startermoleküle sind beispielsweise die zuletztgenannten mehrwertigen Alkohole oder deren Gemische geeignet. Zur Alkoxylierung werden vorzugsweise Ethylenoxid und/oder Propylenoxid, gegebenenfalls im Gemisch und/oder in beliebiger Reihenfolge verwendet.

Ferner geeignet sind die aus der Polyurethanlack-Technologie bekannten, Hydroxylgruppen aufweisenden Polyacrylate, insbesondere solche des Molekulargewichtsbereichs Mn 1000 bis 15 000 mit einem Hydroxylgruppengehalt von 1 bis 10 Gew.-%. Diese Verbindungen werden in an sich bekannter Weise durch Copolymerisation von olefinisch ungesättigten Monomeren unter Mitverwendung von Hydroxylgruppen aufweisenden, olefinisch ungesättigten Monomeren hergestellt. Geeignete Monomere sind beispielsweise Acrylsäure- und/oder Methacrylsäurealkylester mit 1 bis 6 Kohlenstoffatomen im Alkylrest wie beispielsweise Methylacrylat, Methylmethacrylat, Ethylacrylat, Ethylmethacrylat, n-Butylacrylat oder n-Hexyl-methacrylat und/oder Styrol. Geeignete hydroxyfunktionelle Monomere sind beispielsweise Hydroxyalkylester der Acrylsäure oder Methacrylsäure mit 2 bis 6 Kohlenstoffatomen im Hydroxyalkylrest, wie beispielsweise Hydroxyethyl-, 2-Hydroxypropyl-, 3-Hydroxypropyl-, 4-Hydroxybutyl- oder 6-Hydroxyhexyl-acrylat oder -methacrylat.

Ferner geeignet jedoch weniger bevorzugt sind die aus der Polyurethanchemie an sich bekannten Aminopolyether, beispielsweise solche wie sie in EP-A-00 81 701 zur Herstellung von Formkunststoffen empfohlen werden.

Bei der erfindungsgemäßen Verwendung werden die Härter a) und die Kunststoffvorläufer b) vorzugsweise in einem solchen Mengenverhältnis eingesetzt, das einem Äquivalentverhältnis von primären Aminogruppen des Härters a) zu Acetoacetat- bzw. Acetoacetamidgruppen des Kunststoffvorläufers b) von 0,5:1 bis 1:1, vorzugsweise 0,8:1 bis 1:1 entspricht.

Die erfindungsgemäßen Kombinationen aus Kunststoffvorläufern b) und Härtern a) stellen wertvolle Zweikomponenten-Bindemittel für Beschichtungsmittel für beliebige Substrate oder Imprägniermittel insbesondere für Naturstein oder Beton dar.

Gegenstand der Erfindung ist dementsprechend auch ein Verfahren zur Herstellung von Beschichtungen auf beliebigen Substraten unter Verwendung eines Beschichtungsmittels, welches ein Zweikomponenten-Bindemittel und die aus der Lacktechnologie üblichen Hilfs- und Zusatzmittel enthält, dadurch gekennzeichnet, daß das Zweikomponenten-Bindemittel aus
a) einem Härter der Formel (I)

   H₂N-R-Si(OR')₃ (I)

   in Kombination
b) mit mindestens einem Polymeren des Molekulargewichtsbereichs Mn 400 bis 25 000, welches pro Molekül mindestens zwei Struktureinheiten der Formel (II) 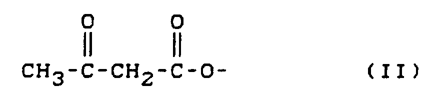 bei einem Gehalt an derartigen Struktureinheiten, bezogen auf das Gewicht des Polymeren, von 1 bis 55 Gew.-% enthält,
besteht, wobei die Mengenverhältnisse der Komponenten a) und b) einem Molverhältnis von Verbindungen der Formel (I) zu Struktureinheiten der Formel (II) von 0,5:1 bis 1:1 entsprechen und wobei
- R: für einen aliphatischen Kohlenwasserstoffrest mit 2 bis 6 Kohlenstoffatomen steht, mit der Maßgabe, daß zwischen dem Stickstoff- und dem Siliciumatom mindestens zwei Kohlenstoffatome angeordnet sind, und
- R': für einen Alkylrest mit 1 bis 4 Kohlenstoffatomen steht.

Gegenstand der Erfindung ist schließlich auch ein Verfahren zum Imprägnieren von Naturstein oder Beton zum Zwecke der Konservierung unter Verwendung eines Imprägniermittels, welches neben üblichen Hilfs- und Zusatzmitteln ein Zweikomponenten-Bindemittel enthält, dadurch gekennzeichnet, daß das Zweikomponenten-Bindemittel aus
a) einem Härter der Formel (I)

   H₂N-R-Si(OR')₃ (I)

   in Kombination
b) mit mindestens einem Polymeren des Molekulargewichtsbereichs Mw 400 bis 25 000, welches pro Molekül mindestens zwei Struktureinheiten der Formel (II) 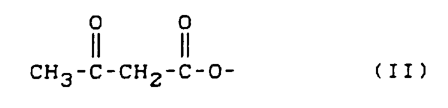 bei einem Gehalt an derartigen Struktureinheiten, bezogen auf das Gewicht des Polymeren, von 1 bis 55 Gew.-% enthält,
besteht, wobei die Mengenverhältnisse der Komponenten a) und b) einem Molverhältnis von Verbindungen der Formel (I) zu Struktureinheiten der Formel (II) von 0,5:1 bis 1:1 entsprechen und wobei R und R' die soeben genannte Bedeutung haben.

Bei den erfindungsgemäßen Verfahren zur Herstellung von Beschichtungen oder Imprägnierungen werden die beschriebenen, gegebenenfalls bereits unter Mitverwendung von Lösungsmitteln der aus der Lacktechnologie an sich bekannten Art hergestellten Kombinationen aus Härter a) und Kunststoffvorläufer b) als Zweikomponenten-Bindemittel verwendet.

Geeignete Lösungsmittel, die in den Beschichtungs- bzw. Imprägniermitteln verwendet werden können und gegebenenfalls bereits bei der Herstellung der Bindemittelkombinationen zum Einsatz gelangen sind beispielsweise Ethanol, Propanol, Butanol, Methoxyethanol, Methoxypropanol, Methoxypropylacetat, Dimethoxyethan, Toluol, Xylol, Benzylacetat und deren Mischungen.

Im allgemeinen liegt der Feststoffgehalt der erfindungsgemäßen Beschichtungs- bzw. Imprägniermittel bei 10 bis 80 Gew.-%.

Die Beschichtungs- bzw. Imprägniermittel können selbst neben den beispielhaft genannten Lösungsmitteln weitere an sich bekannte Hilfs- und Zusatzmittel enthalten. Hierzu gehören beispielsweise Verlaufhilfsmittel, Füllstoffe oder Pigmente.

Die erfindungsgemäßen Beschichtungsmittel weisen im allgemeinen nach Vereinigung der wesentlichen Bindemittelkomponenten a) und b) als 50 %ige Lösung eine Topfzeit von mindestens 30 Minuten auf.

Bei der Herstellung von Beschichtungen erfolgt die Anwendung der erfindungsgemäßen Beschichtungsmittel vorzugsweise in Trockenfilmstärken von 5 bis 200 µm. Geeignete Substrate sind insbesondere Metall, Stein, Glas, Kunststoff und Holz.

Bei der Verwendung der erfindungsgemäßen Kombinationen aus den Einzelkomponenten a) und b) als Imprägniermittel insbesondere für Naturstein oder Beton kommen die erfindungsgemäßen Kombinationen vorzugsweise in 15 bis 50-gew.%iger Lösung in den beispielhaft genannten Lösungsmitteln zum Einsatz.

Die nachfolgenden Beispiele dienen der weiteren Erläuterung der Erfindung, ohne diese zu begrenzen.

### Beispiele

### Herstellung von Kunststoffvorläufern:

### Kunststoffvorläufer I:

170 g eines Polyacrylatharzes des Molekulargewichts Mn 10 000, hergestellt durch Copolymerisation von 70 Gew.-Teilen Methylmethacrylat, 15 Gew.-Teilen n-Butylacrylat und 15 Gew.-Teilen Hydroxyethylmethacrylat werden in n-Butylacetat zu einer 50 gew.-%igen Lösung gelöst. Anschließend wird diese Lösung mit 8,4 g Diketen versetzt und dann unter Rühren während 1 Stunde auf 100°C erhitzt. Anschließend wird das Reaktionsgemisch noch 8 Stunden bei 120 bis 130°C gerührt und dann vom Lösungsmittel befreit. Das so isolierte schwach gelbe Harz enthält pro 100 g 9 g Acetoacetatgruppen (bestimmt durch potentiometrische Titration der sauren Methylengruppen mit 0,1 n KOH).

### Kunststoffvorläufer II:

215,5 g eines Polyhydroxypolyesters (0,25 Mol OH), hergestellt aus 12 Gew.-Teilen Trimethylolpropan, 10 Gew.-Teilen Pentaerythrit, 21 Gew.-Teilen Benzoesäure, 28 Gew.-Teilen Phthalsäure und 20 Gew.-Teilen einer handelsüblichen, verzweigten C₁₈-Fettsäure (®Unimac 5680 der Firma Unilever) werden 60 gew.-%ig in Xylol gelöst. Dann wird diese Lösung mit 21 g Diketen versetzt. Die weitere Reaktion und Aufarbeitung erfolgt in Analogie zu Kunststoffvorläufer I. Das resultierende gelbe Harz enthält pro 100 g 14 g Acetoacetatgruppen.

### Beispiel 1

33 g des Kunststoffvorläufers I, gelöst in 33 g n-Butylacetat werden mit 3,5 g 3-Aminopropyltriethoxysilan versetzt und auf ein entfettetes Blech aufgetragen. Das Reaktionsgemisch ist nach 4 Stunden geliert. Die Beschichtung ist nach 15 Minuten trocken und klebfrei. Die Beschichtung widersteht mehr als 100 Doppelhüben mit einem Methylethylketon getränkten Wattebausch. Die Pendelhärte nach König (DIN 53 157) beträgt 140 s (23°C/50 % rel. Luftfeuchte).

### Beispiel 2

33 g des Kunststoffvorläufers I, gelöst in 33 g n-Butylacetat werden mit 2,8 g 3-Aminopropyltrimethoxysilan versetzt und auf ein entfettetes Blech aufgetragen. Die Reaktionsmischung ist nach einer Stunde geliert. Die Beschichtung widersteht ca. 70 Doppelhüben mit einem Methylethylketon getränkten Wattebausch. Die Pendelhärte nach König (DIN 53 157) beträgt 120 s (23°C/50 % rel. Luftfeuchte).

### Beispiel 3

20 g des Kunststoffvorläufers II, gelöst in 33 g n-Butylacetat, werden mit 5 g 3-Aminopropyltrimethoxysilan versetzt und auf ein entfettetes Blech aufgetragen. Die Reaktionsmischung ist nach 45 Minuten geliert. Die Beschichtung ist nach einer Stunde trocken und klebfrei.

Die Beschichtung widersteht mehr als 100 Doppelhüben mit einem Methylethylketon getränkten Wattebausch. Die Pendelhärte nach König (DIN 53 157) beträgt 80 s (23°C/50 % rel. Luftfeuchte).

## Patentansprüche

1. Verwendung von
a) eine primäre Aminogruppe und eine Alkoxysilangruppe aufweisenden organischen Verbindungen der Formel
H₂N-R-Si(OR')₃ (I)
wobei
R für einen aliphatischen Kohlenwasserstoffrest mit 2 bis 6 Kohlenstoffatomen steht, mit der Maßgabe, daß zwischen dem Stickstoff- und dem Siliciumatom mindestens zwei Kohlenstoffatome angeordnet sind, und
R' für einen Alkylrest mit 1 bis 4 Kohlenstoffatomen steht,
als Härter für
b) insgesamt mindestens zwei Acetoacetat- und/oder Acetoacetamidgruppen pro Molekül aufweisende Kunststoffvorläufer des Molekulargewichtsbereichs Mn von 400 bis 25.000.

2. Verwendung gemäß Anspruch 1, dadurch gekennzeichnet, daß man als Kunststoffvorläufer b) Polymere des Molekulargewichts Mn von 400 bis 25 000 verwendet, die pro Molekül mindestens zwei Struktureinheiten der Formel (II) 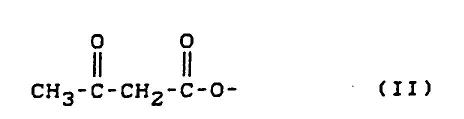 bei einem Gehalt an diesen Struktureinheiten, bezogen auf das Gewicht der Polymeren von 1 bis 55 Gew.-% aufweisen.

3. Verfahren zur Herstellung von Beschichtungen auf beliebigen Substraten unter Verwendung eines Beschichtungsmittels, welches ein Zweikomponenten-Bindemittel und die aus der Lacktechnologie üblichen Hilfs- und Zusatzmittel enthält, dadurch gekennzeichnet, daß das Zweikomponenten-Bindemittel aus
a) einem Härter der Formel (I)
H₂N-R-Si(OR')₃ (I)
in Kombination
b) mit mindestens einem Polymeren des Molekulargewichtsbereichs Mn 400 bis 25 000, welches pro Molekül mindestens zwei Struktureinheiten der Formel (II) 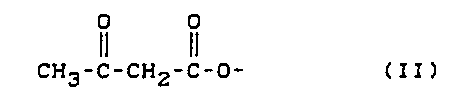 bei einem Gehalt an derartigen Struktureinheiten, bezogen auf das Gewicht des Polymeren, von 1 bis 55 Gew.-% enthält
besteht, wobei die Mengenverhältnisse der Komponenten a) und b) einem Molverhältnis von Verbindungen der Formel (I) zu Struktureinheiten der Formel (II) von 0,5:1 bis 1:1 entsprechen und wobei R und R' die in Anspruch 1 genannte Bedeutung haben.

4. Verfahren zum Imprägnieren von Naturstein oder Beton zum Zwecke der Konservierung unter Verwendung eines Imprägniermittels, welches neben üblichen Hilfs- und Zusatzmitteln ein Zweikomponenten-Bindemittel enthält, dadurch gekennzeichnet, daß das Zweikomponenten-Bindemittel aus
a) einem Härter der Formel (I)
H₂N-R-Si(OR')₃ (I)
in Kombination
b) mit mindestens einem Polymeren des Molekulargewichtsbereichs Mn 400 bis 25 000, welches pro Molekül mindestens zwei Struktureinheiten der Formel (II) 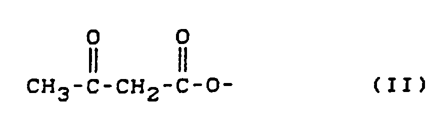 bei einem Gehalt an derartigen Struktureinheiten, bezogen auf das Gewicht des Polymeren, von 1 bis 55 Gew.-% enthält,
besteht, wobei die Mengenverhältnisse der Komponenten a) und b) einem Molverhaltnis von Verbindungen der Formel (I) zu Struktureinheiten der Formel (II) von 0,5:1 bis 1:1 entsprechen und wobei R und R' die in Anspruch 1 genannte Bedeutung haben.

## Claims

1. The use of
a) organic compounds containing a primary amino group and an alkoxysilane group corresponding to the formula
H₂N-R-Si(OR')₃ (I)
wherein
R denotes an aliphatic hydrocarbon radical containing 2 to 6 carbon atoms, with the proviso that at least two carbon atoms are arranged between the nitrogen atom and the silicon atom, and
R' denotes an alkyl radical containing 1 to 4 carbon atoms,
as curing agents for
b) plastics precursors containing in all at least two acetoacetate and/or acetoacetamide groups per molecule with a molecular weight Mn in the range from 400 to 25 000.

2. The use claimed in claim 1, characterised in that polymers with a molecular weight Mn in the range from 400 to 25 000 which contain at least two structural units corresponding to formula (II) 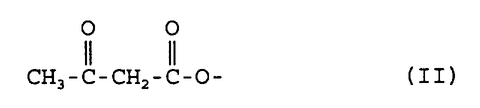 per molecule for a content of such structural units, based on the weight of the polymers, of 1 to 55 wt.% are used as the plastics precursor b).

3. A process for the production of coatings on any substrates using a coating compound which contains a two-component binder and the auxiliary substances and additives conventionally used in paint technology, characterised in that the two-component binder consists of
a) a curing agent corresponding to formula (I)
H₂N-R-Si(OR')₃ (I)
in combination
b) with at least one polymer having a molecular weight Mn in the range from 400 to 25 000, which contains at least two structural units corresponding to formula (II) 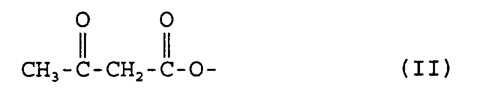 per molecule for a content of such structural units, based on the weight of the polymer, of 1 to 55 wt.%,
the quantities in which components a) and b) are used corresponding to a molar ratio of compounds of formula (I) to structural units of formula (II) of 0.5:1 to 1:1 and wherein R and R' are as defined in claim 1.

4. A process for impregnating natural stone or concrete for preservation purposes using an impregnating compound which, in addition to conventional auxiliary substances and additives, contains a two-component binder, characterised in that the two-component binder consists of
a) a curing agent corresponding to formula (I)
H₂N-R-Si(OR')₃ (I)
in combination
b) with at least one polymer having a molecular weight Mn in the range from 400 to 25 000, which contains at least two structural units corresponding to formula (II) 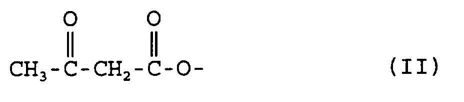 per molecule for a content of such structural units, based on the weight of the polymer, of 1 to 55 wt.%,
the quantities in which components a) and b) are used corresponding to a molar ratio of compounds of formula (I) to structural units of formula (II) of 0.5:1 to 1:1 and wherein R and R' are as defined in claim 1.

## Revendications

1. Utilisation
a) de composés organiques présentant un groupe amino primaire et un groupe alcoxysilane, répondant à la formule
H₂N-R-Si(OR')₃ (I)
dans laquelle
R représente un radical d'hydrocarbure aliphatique contenant de 2 à 6 atomes de carbone, avec cette mesure qu'entre l'atome d'azote et l'atome de silicium, sont disposés au moins 2 atomes de carbone, et
R' représente un radical alkyle contenant de 1 à 4 atomes de carbone,
comme durcisseurs pour
b) des précurseurs de matières synthétiques du domaine de poids moléculaire Mn de 400 à 25.000, présentant au total au moins deux groupes acétoacétate et/ou acétoacétamide par molécule.

2. Utilisation selon la revendication 1, caractérisée en ce que, comme précurseurs b) de matières synthétiques, on utilise des polymères du poids moléculaire Mn de 400 à 25.000, qui présentent, par molécule, au moins deux unités de structure de formule (II) 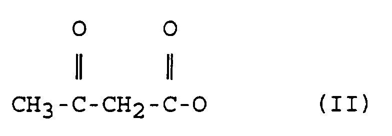 avec une teneur quant à ces unités de structure, rapportée au poids du polymère, de 1 à 55% en poids.

3. Procédé pour la préparation d'enductions sur des substrats de n'importe quels types en utilisant un agent d'enduction qui contient un liant à deux composants, ainsi que les adjuvants et les additifs habituels dans la technologie des laques, des vernis ou des peintures, caractérisé en ce que le liant à deux composants est constitué par
a) un durcisseur de formule (I)
H₂N-R-Si(OR')₃ (I)
en combinaison
b) avec au moins un polymère du domaine de poids moléculaire Mn de 400 à 25.000, qui contient, par molécule, au moins deux unités de structure de formule (II) 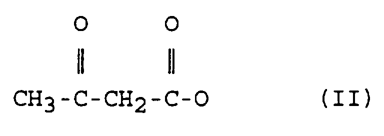 avec une teneur quant aux unités de structure de ce type, rapportée au poids du polymère, de 1 à 55% en poids.
dans lequel les proportions des composants a) et b) correspondent à un rapport molaire des composés de formule (I) aux unités de structure de formule (II) de 0,5:1 à 1:1, et dans lequel R et R' ont la signification indiquée à la revendication 1.

4. Procédé pour imprégner de la pierre naturelle ou du béton à des fins de conservation en utilisant un agent d'imprégnation qui contient, outre des adjuvants et des additifs habituels, un liant à deux composants, caractérisé en ce que le liant à deux composants est constitué par
a) un durcisseur de formule (I)
H₂N-R-Si(OR')₃ (I)
en combinaison
b) avec au moins un polymère du domaine de poids moléculaire Mn de 400 à 25.000, qui contient, par molécule, au moins deux unités de structure de formule (II) 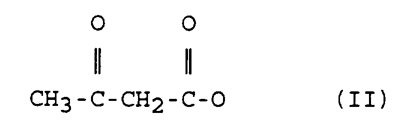 avec une teneur quant aux unités de structure de ce type, rapportée au poids du polymère, de 1 à 55% en poids. dans lequel les proportions des composants a) et b) correspondent à un rapport molaire des composés de formule (I) aux unités de structure de formule (II) de 0,5:1 à 1:1, et dans lequel R et R' ont la signification indiquée à la revendication 1.
